(19) Europäisches Patentamt
European Patent Office
Office européen des brevets

(11) **EP 2 947 480 A1**

(12) **EUROPEAN PATENT APPLICATION**
published in accordance with Art. 153(4) EPC

(43) Date of publication:
**25.11.2015 Bulletin 2015/48**

(51) Int Cl.:
***G01V 1/28*** *(2006.01)*

(21) Application number: **14740178.0**

(22) Date of filing: **17.01.2014**

(86) International application number:
**PCT/RU2014/000024**

(87) International publication number:
**WO 2014/112900 (24.07.2014 Gazette 2014/30)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **17.01.2013 RU 2013102001**

(71) Applicant: **Tabakov, Aleksandr Aleksandrovich
Moskva, 123007 (RU)**

(72) Inventor: **Tabakov, Aleksandr Aleksandrovich
Moskva, 123007 (RU)**

(74) Representative: **Jeck, Anton
Klingengasse 2
71665 Vaihingen/Enz (DE)**

(54) **SEISMIC SURVEY METHOD**

(57)   Elastic vibrations are excited repeatedly at different inclination angles relative to the points of reception on air, water or on a solid body floating on water. The elastic vibrations are detected by sensors situated on the earth's surface, at the bottom of the water reservoir or inside an elastic half-space and stored in digital form. Further, seismograms are formed for apparent sources located at each point of reception via summation of records in each seismic detector with advancing delays equal to the time of propagation from real vibration sources to selected apparent sources, controlled based on the time of deleting the first arrival at the location of the apparent source.

EFFECT: high accuracy of exploration data by improving the signal-to noise ratio. 6 dwg.

Acoustic medium

Elastic medium

**Fig. 1**

## Description

Pertinent art.

The present invention is the way of seismic exploration. More specifically, the invention belongs to ways of formation and the subsequent processing of seismograms received as a result of activation of seismic energy sources made definitely in time and space.

State of art.

The marine borehole seismic exploration method described in Russian patents RU №2358291 C2 of 30.04.2004 and RU №2460094 C2 of 15.10.2007 is known. This method is characterized by that the way of seismic sources system, namely the air guns carried down in the thickness of water, control is proposed. The sources are consistently excited, combining the first maxima of pressure from each seismic source in such a way that amplitude of combined wave is maximized by imposing of pressure waves from all air guns. that promotes the best analysis of seismic data thanks to more exact to definition of signatures of a source. It promotes the better analysis of seismic data in response to more exact definition of signatures of a source.

The disadvantages of the method are as follows:

- the possibilities of simultaneous summation of signals for signal/noise ratio improvement are not used. Excitement comes on various directions from the selected shot point and a delays of sources for in-phase accumulation in various directions are various;
- the scope of use is limited to sea conditions and doesn't extend on excitement of signals in air;
- at the accumulation of signals by management of the reaction time of sources it is impossible to set a timing advance as physically impracticable one.

Disclosure of the invention.

The essence of the invention is that before processing of seismic data obtained at excitement of sources or groups of sources the seismograms for the apparent sources are formed. The apparent sources are located in each receiver point or in some receiver points and accrue from summation of records in every seismic receiver with the advancing delays equal to a propagation time from the actual sources to the chosen apparent sources. For the further processing coordinates of source for summed seismogram are replaced with coordinates of apparent source. The seismogram from apparent source can be formed by the following formula:

$$S_n^I(\omega) = \sum_{m=M_1}^{M_2} S_n^m(\omega)\, e^{i\omega(\delta t_{m,l})} \quad [1]$$

where $w$ - cyclic frequency;

$S_n^l(w)$ - Fourier transform for summed trace, represents approach to the trace in point "$n$" (1 dwg, source (3) within the chosen maximum distance (9) from chosen apparent source(4)) from apparent source in point $n=l$ (1 dwg , element 4);

$S_n^m(w)$ - Fourier transform from real seismic record registered by receiver in point "$n$" (1 dwg, receiver (3) within chosen maximal distance (9) from chosen apparent source (4)) from one of real seismic sources (1 dwg, real source (6) at distance (5), less or equal to chosen maximal distance (1) from chosen apparent source(4)), located in point "$m$" (1 dwg, real source (6) at distance (5), less or equal to chosen maximal distance (10) from chosen apparent source (4));

$\delta t_{m,l}$ - traveltime of wave from real source located in point "$m$" (1 dwg, real source (6) at distance (5) less or equal to chosen maximal distance (10) from chosen apparent source(4)) to apparent source located at points "$l$" (1 dwg, element 4);

$M_1$ - real source, located on the left extreme border of selection of the real sources (1 dwg, element 6);

$M_2$ - real source, located on the right extreme border of selection of the real sources (1 dwg, element 6).

The alleged invention allows to reach technical result in constituting considerable improvement of a signal/noise ratio which is reached not by thanking to way expensive and/or dangerous and/or harmful to environment maximizing of amplitude which is really excited by a complex of sources of summed wave and/or maximizing amplitudes of the waves which are really excited by different sources but with the use of new principle of construction of seismograms from data obtained by receivers as a result of seismic sources activation. And real maximizing of amplitudes isn't excluded. The technical result received as a result of seismic exploration method described in the present invention allows not only to improve a signal/noise ratio considerably at marine seismic exploration without increase of manufacturing cost but also application in wide scales does almost possible method of air seismic exploration that opens prospects for the drastic decrease in cost of seismic exploration in almost impassable, woody, and also the occupied districts.

The big ecological effect can be at the same time reached by means of not cuttings down of glades for journey of sources of excitement and not causing damage to ecologically vulnerable surfaces of the tundra and other natural ecosystems, in the nature protected and especially nature protected territories.

Short description of drawings:

- 1 dwg - sources and receivers layout scheme for 2D case. The scheme illustrates the selection of sources and receivers in simplified two-dimensional survey;

- 2 dwg - the scheme describing algorithm of apparent seismograms construction for claimed method;
- 3A dwg - the scheme illustrating an arrangement of sources and receivers rather various physical environments for which application of claimed invention is possible, it agrees to the first of possible options of the invention implementation;
- 3B dwg - the scheme illustrating an arrangement of sources and receivers rather various physical environments for which application of claimed invention is possible, it agrees to the second of possible options of the invention implementation;
- 3C dwg - the scheme illustrating an arrangement of sources and receivers rather various physical environments for which application of claimed invention is possible, it agrees to the third of possible options of the invention implementation;
- 3D dwg - the scheme illustrating an arrangement of sources and receivers rather various physical environments for which application of claimed invention is possible, it agrees to the fourth of possible options of the invention implementation;

On all drawings identical elements designate similar but not obligatory identical objects.

Exercise of invention

The schematic diagram of implementation of the invention is shown on 2 dwg.

The first of the possible cases of invention realization is shown on 3A dwg and includes claimed method of primary seismograms construction for the following seismic data processing when real sources (6) are located in air environment and receivers (3) and apparent sources (4) are located in every receiver points or in some receiver points on the air and elastic environment boundary (1) or inside elastic environment on small depth up to 50 meters from air and elastic environment boundary (1).

The second of the possible cases of invention realization is shown on 3B dwg and includes claimed method of primary seismograms construction for the following seismic data processing when real sources (6) are located in water environment and/or at the boundary of water and air environments (2) and receivers (3) and apparent sources (4) are located in every receiver points or in some receiver points on the water and elastic environment boundary (8) or inside elastic environment on small depth up to 50 meters from water and elastic environment boundary (8).

The third of the possible cases of invention realization is shown on 3C dwg and includes claimed method of primary seismograms construction for the following seismic data processing when real sources (6) are located in air environment and receivers (3) and apparent sources (4) are located in every receiver points or in some receiver points on the water and elastic environment boundary (1) or inside elastic environment on small depth up to 50 meters from water and elastic environment boundary (1).

The fourth of the possible cases of invention realization is shown on 3D dwg and includes claimed method of primary seismograms construction for the following seismic data processing when real sources (6) are located on ice and/or on the other floating body (7) and receivers (3) and apparent sources (4) are located in every receiver points or in some receiver points on the water and elastic environment boundary (8) or inside elastic environment on small depth up to 50 meters from water and elastic environment boundary (8).

The scope of use of the invention isn't limited only above-stated cases.

## Claims

1.   The way of seismic exploration which is **characterized by** that elastic waves are excited repeatedly under various inclination angles concerning receivers points in air, water or on the solid body floating on a water surface, elastic waves are registered by sensors located on an earth surface, water basin bottom or in an elastic half-space are also remembered in the digitized form, differing in that for the purpose of improvement of a signal/noise ratio the seismograms for the apparent sources located in various receiver points are formed by summation of traces in each seismic receiver with the advancing delays equal to traveltimes from the actual vibration sources to the chosen apparent sources controlled by first break times registration in apparent source location point.

Acoustic
medium

Elastic
medium

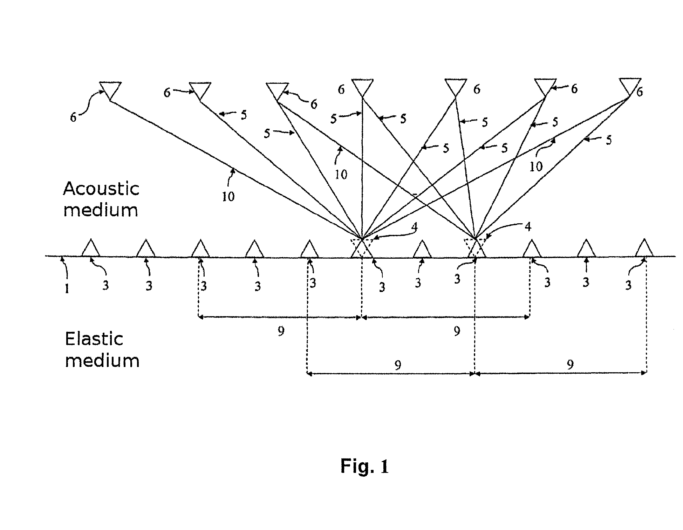

**Fig. 1**

Start

Selection of receiver for apparent source

Selection of receivers within maximal allowed
distances from apparent source

Selection of sources within maximal allowed
distances from apparent source

Determination of direct waves first break
times from selected actual sources of
receiver selected as apparent source

Construction of summed seismogram
for selected apparent source by summing
the record of the same seismic receiver
with time shifts equal to first break times
from every sources to receiver in apparent
source point

Is summed seismograms
constructed for all
apparent sources?

No

Yes

End

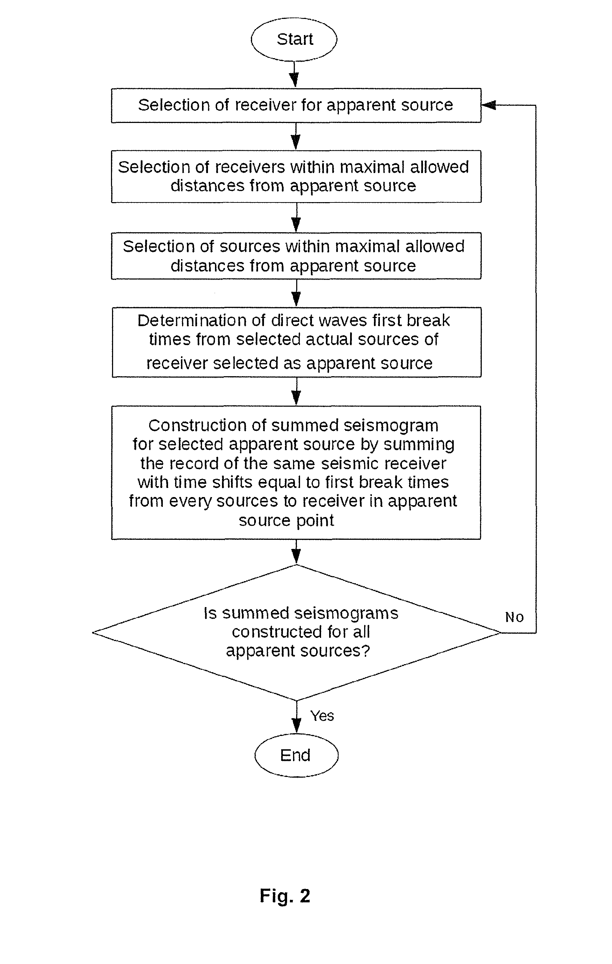

**Fig. 2**

Air
(acoustic medium)

Elastic
medium

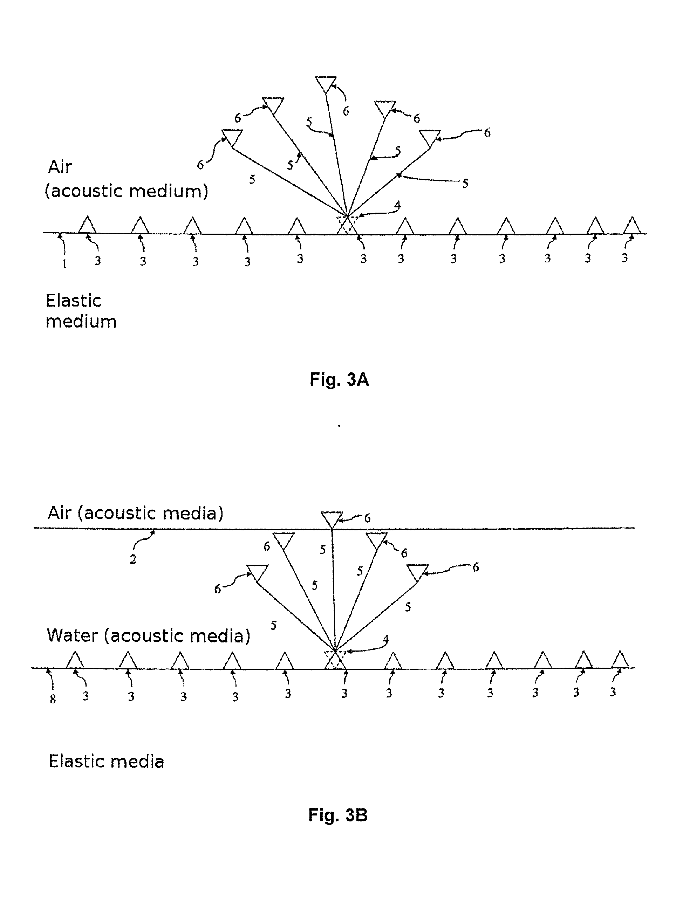

**Fig. 3A**

Air (acoustic media)

Water (acoustic media)

Elastic media

**Fig. 3B**

Air
(acoustic media)

Water
(acoustic media)

Elastic media

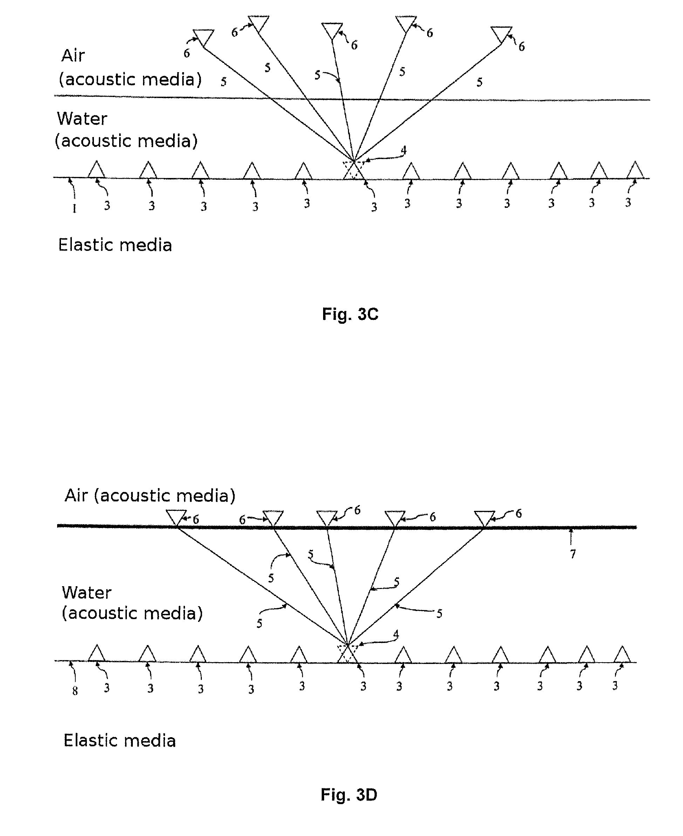

**Fig. 3C**

Air (acoustic media)

Water
(acoustic media)

Elastic media

**Fig. 3D**

## INTERNATIONAL SEARCH REPORT

| International application No. |
|---|
| PCT/RU 2014/000024 |

**A.    CLASSIFICATION OF SUBJECT MATTER**
**G01V 1/28 (2006.01)**

According to International Patent Classification (IPC) or to both national classification and IPC

**B.    FIELDS SEARCHED**

Minimum documentation searched (classification system followed by classification symbols)
**G01V 1/00-1/20, 1/28-1/36, 1/40, 1/48-1/50**

Documentation searched other than minimum documentation to the extent that such documents are included in the fields searched

Electronic data base consulted during the international search (name of data base and, where practicable, search terms used)
**EAPATIS, Espacenet, PAJ, Patsearch (RUPTO internal), RUABRU, RUABU1, RUPAT, RUPAT OLD, RUPTO, USPTO, USPTO DB, Patentscope, Google**

**C.    DOCUMENTS CONSIDERED TO BE RELEVANT**

| Category* | Citation of document, with indication, where appropriate, of the relevant passages | Relevant to claim No. |
|---|---|---|
| A | RU 2013791 C1 (KIEVSKOE GEOFIZICHESKOE OTDELENIE UKRAINSKOGO NAUCHNO-ISSLEDOVATELSKOGO GEOLOGORAZVEDOCHNOGO INSTITUTA) 30.05.1994, the claims | 1 |
| A | UA 10354 A (KIEVSKOE GEOFIZICHESKOE OTDELENIE UKRAINSKOGO GOSUDARSTVENNOGO GEOLOGORAZVEDOCHNOGO INSTITUTA) 25.12.1996, the claims | 1 |
| A | SU 1672388 A1 (KIEVSKOE GEOFIZICHESKOE OTDELENIE UKRAINSKOGO NAUCHNO-ISSLEDOVATELSKOGO GEOLOGORAZVEDOCHNOGO INSTITUTA) 23.08.1991, the claims | 1 |
| A | RU 2460094 C2 (SHLJUMBERGER TEKNOLODZHI B.V.) 27.08.2012, the claims | 1 |
| A | US 2004/0008577 A1 (NICOLAE MOLDVEANU) 15.01.2004, the claims | 1 |

[X] Further documents are listed in the continuation of Box C.    [ ] See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 26 May 2014 (26.05.2014) | 05 June 2014 (05.06.2014) |

| Name and mailing address of the ISA/ RU | Authorized officer |
|---|---|
| Facsimile No. | Telephone No. |

Form PCT/ISA/210 (second sheet) (April 2005)

**INTERNATIONAL SEARCH REPORT**

| International application No. |
|---|
| PCT/RU 2014/000024 |

C (Continuation).    DOCUMENTS CONSIDERED TO BE RELEVANT

| Category* | Citation of document, with indication, where appropriate, of the relevant passages | Relevant to claim No. |
|---|---|---|
| A | US 7859945 B2 (CGG VERITAS SERVICES INC.) 28.12.2010, the claims | 1 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- RU 2358291 C2
- RU 2460094 C2